# EUROPÄISCHE PATENTSCHRIFT

(11) **EP 2 539 614 B1**
(45) Veröffentlichungstag und Bekanntmachung des Hinweises auf die Patenterteilung: **24.12.2014**
(21) Anmeldenummer: 11702166.7
(22) Anmeldetag: 25.01.2011
(51) Int. Cl.: F16K 31/06

(54) **ELEKTROMAGNETISCHES HYDRAULIKVENTIL**
ELECTROMAGNETIC HYDRAULIC VALVE
VALVE HYDRAULIQUE ÉLECTROMAGNÉTIQUE

(30) Priorität: 26.02.2010 DE 102010009400
(43) Veröffentlichungstag der Anmeldung: 02.01.2013
(73) Patentinhaber: Schaeffler Technologies GmbH & Co. KG, 91074 Herzogenaurach (DE)
(72) Erfinder: HOPPE, Jens, 91056 Erlangen (DE); KONIAS, Stefan, 91054 Erlangen (DE); WANG, Yi, 90762 Fürth (DE)
(86) Internationale Anmeldenummer: PCT/EP2011/050980
(87) Internationale Veröffentlichungsnummer: WO 2011/104059

(56) Entgegenhaltungen:
- EP-A1- 0 555 177
- DE-A1- 10 162 754
- DE-A1-102006 042 215

## Beschreibung

### Gebiet der Erfindung

Die Erfindung betrifft ein elektromagnetisches Hydraulikventil, umfassend einen Elektromagneten mit einem Spulenträger, welcher mindestens eine Spule in einer Umspritzung vollständig umschlossen aufnimmt und zumindest einen Endpol trägt.

### Hintergrund der Erfindung

Derartige elektromagnetische Hydraulikventile kommen unter anderem bei Ventiltrieben von Brennkraftmaschinen zur Anwendung, bei welchen Veränderungen von Öffnungs- und Schließzeiten von Gaswechselventile durch eine Phasenverstellung einer Nockenwelle gegenüber einer Kurbelwelle mithilfe einer Verstelleinrichtung hervorgerufen werden können. Hierbei reguliert das elektromagnetische Hydraulikventil üblicherweise die Zufuhr von unter Druck stehendem Fluid zu einer hydraulischen Verstelleinrichtung der jeweiligen Nockenwelle.

### Stand der Technik

Aus der DE 10 2005 053 961 A1 geht ein elektromagnetisches Hydraulikventil hervor, welches sich aus einem Elektromagneten und einem daran anschließenden Ventilteil zusammensetzt. Der Elektromagnet weist hierbei einen hohlzylinderförmigen Spulenträger auf, der aus mehreren Einzelteilen besteht und zwischen diesen Teilen eine Spule vollständig umschlossen aufnimmt. Ein radial innerhalb der Spule liegender Spulenträgerteil bildet zudem an einem axialen Ende einen magnetisierbaren Abschnitt aus und führt in einer Innenbohrung einen axial entgegen einer Rückstellfeder beweglichen Magnetanker.

Wird die Spule nun über einen, am Spulenträger des Elektromagneten vorgesehenen Anschlussabschnitt mit Strom versorgt, so wird der Endabschnitt des inneren Spulenträgerteils durch das erzeugte Magnetfeld magnetisiert und bildet einen Endpol des Elektromagneten aus. Je nach Strombeaufschlagung der Spule und der hiermit einhergehenden Magnetisierung des Endabschnitts wird der Magnetanker entgegen der Rückstellfeder entsprechend axial in Richtung des Endabschnitts bewegt. Dabei führt der Magnetanker einen verschiebbaren Steuerkolben mit sich, welcher in dem, an dem Elektromagneten anschließenden Ventilteil aufgenommen ist. Entsprechend der hierdurch eingestellten Position des Steuerkolbens wird ein Fluidfluss über den Ventilteil geregelt.

Im Falle der DE 10 2005 053 961 A1 wird der Endpol zur Bewegung des Magnetankers also durch einen axial in den zylindrischen Innenraum der Spule eingeschobenen Spulenträgerteil gebildet, dessen Endbereich magnetisierbar ist.

Des Weiteren ist aus der DE 10 2006 042 215 A1 ein, sich aus einem Elektromagneten und einem Ventilteil zusammensetzendes elektromagnetisches Hydraulikventil bekannt, bei welchem ein Spulenträger des Elektromagneten eine Spule in einer Umspritzung vollständig umschlossen aufnimmt. Im radialen Innenbereich der Spule ist zudem ein magnetisierbares Einlegeteil platziert, welches ebenfalls durch die Umspritzung des Spulenträgers getragen wird und bei Bestromung der Spule einen Endpol des Elektromagneten ausbildet. Um allerdings ein Eindringen von Feuchtigkeit über den Umspritzungsbereich des Einlegeteils zu verhindern, ist in axialer Richtung vor dem Einlegeteil liegend ein O-Ring zwischen Spulenträger und Umspritzung eingebracht.

Der Spulenträger führt ferner in einem Innenraum einen axial beweglichen Magnetanker, welcher bei einer Bestromung der Spule unter Einfluss des magnetisierten Einlegeteils eine translatorische Bewegung ausführt und dabei einen Steuerkolben des Ventilteils mit sich führt. Der Ventilteil ist dabei als 4/3-Wegeventil ausgebildet, so dass Druckmittel je nach Stellung des Steuerkolbens vom Pumpenanschluss zu einem der beiden Arbeitsanschlüsse gelangt, während der jeweils andere Arbeitsanschluss mit einem stirnseitigen Tankanschluss verbunden wird.

### Aufgabe der Erfindung

Ausgehend von einer Anordnung nach dem Stand der Technik ist es die Aufgabe der vorliegenden Erfindung, ein elektromagnetisches Hydraulikventil zur Verfügung zu stellen, welches einen kompakten Aufbau aufweist und sich mit niedrigem Herstellungsaufwand fertigen lässt.

Diese Aufgabe wird ausgehend von einem Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

### Zusammenfassung der Erfindung

Die Erfindung umfasst die technische Lehre, dass sich der Endpol des Elektromagneten aus Einzelsegmenten zusammensetzt, die in radial verlaufenden Durchbrüchen eingeschoben sind, welche im Spulenträger und in der Umspritzung und benachbart zu der mindestens einen Spule ausgebildet sind. Durch diese Maßnahme kann der Endpol unabhängig von und ohne Beeinträchtigung der vollständigen Umspritzung der Spule in den Spulenträger eingebracht werden, so dass ein zuverlässiger Schutz der Spule vor eindringender Flüssigkeit ohne Verwendung von Dichtelementen, wie O-Ringen, sichergestellt werden kann. Des Weiteren lässt sich die Platzierung des Endpols hierdurch sehr kompakt gestalten. Denn die Einzelsegmente des Endpols werden nicht im radialen Innenbereich der Spule platziert, sondern axial benachbart zu dieser. Hierdurch lässt sich insbesondere die radiale Erstreckung klein halten. Schließlich kann auch die Montagerobustheit des Systems deutlich gesteigert werden.

Im Unterschied hierzu wird bei elektromagnetischen Hydraulikventilen des Standes der Technik ein, den Endpol ausbildendes Element entweder nach einer Umspritzung der Spule axial in den Innenbereich des Spulenträgers eingeschoben und vergrößert damit den radialen Bauraum oder es werden Einlegeteile als Endpole gemeinsam mit der Spule umspritzt, was aber die Verwendung von Dichtelementen nötig macht, um ein Eindringen von Feuchtigkeit in den Bereich der Spule zu unterbinden. Systeme des Standes der Technik weisen also entweder einen größeren Bauraum oder einen höheren Herstellungsaufwand auf.

Gemäß einer Ausführungsform der Erfindung weisen die Einzelsegmente kreisringsegmentartige Konturen auf, die jeweils einem Querschnitt des je zugehörigen Durchbruchs entsprechen. Dies hat den Vorteil, dass die Einzelsegmente somit lediglich den Raum des jeweiligen Durchbruchs ausfüllen und hierdurch den Innenraum des Spulenträgers und damit auch die Führung des Magnetankers nicht beeinträchtigen.

In Weiterbildung der Erfindung verlaufen in Axialstegen zwischen den Durchbrüchen je an- bzw. abwickelseitige Verbindungen der mindestens einen Spule zu einem Anschlussabschnitt. Durch diese Maßnahme kann eine Stromversorgung der mindestens einen Spule trotz der benachbart liegenden Endpoleinzelsegmente unproblematisch über die Umspritzung des Spulenträgers geführt werden.

Es ist eine weitere, vorteilhafte Ausführungsform der Erfindung, dass die Durchbrüche an axialen Begrenzungen zumindest bereichsweise quer verlaufende Rippen aufweisen. Mittels dieser Rippen werden die Einzelsegmente des Endpols nach einer Montage in der gewünschten Position gehalten und zudem toleranzbedingte Dimensionsschwankungen in diesem Bereich ausgeglichen.

Entsprechend einer weiteren Ausgestaltung der Erfindung sind die Einzelsegmente als Stanzteile ausgebildet. Vorteilhafterweise lässt sich hierdurch eine einfache Herstellung der Einzelsegmente realisieren.

Zweckmäßigerweise besteht die Umspritzung des Spulenträgers des Weiteren aus Kunststoff. Dies hat den Vorteil, dass eine robuste und einfach herstellbare Einkapselung der mindestens einen Spule und der elektrischen Verbindung zum Anschlussabschnitt dargestellt werden kann.

### Ausführungsbeispiel

### Kurze Beschreibung der Zeichnungen

Weitere, die Erfindung verbessernde Maßnahmen werden nachstehend gemeinsam mit der Beschreibung einer bevorzugten Ausführungsform der Erfindung anhand von Figuren näher dargestellt. Es zeigt:
- Figur 1: eine perspektivische Ansicht des erfindungsgemäßen elektromagnetischen Hydraulikventils;
- Figur 2: einen Längsschnitt durch einen Elektromagneten des erfindungsgemäßen Hydraulikventils mit eingesetzten Einzelsegmenten; und
- Figur 3: eine perspektivische Ansicht des Elektromagneten mit herausgenommenen Einzelsegmenten.

### Ausführliche Beschreibung der Zeichnungen

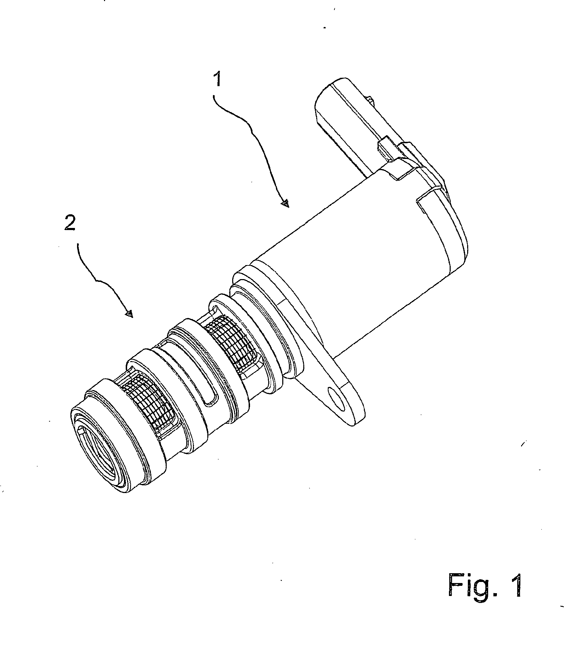

In Figur 1 ist eine perspektivische Ansicht des erfindungsgemäßen elektromagnetischen Hydraulikventils zu sehen, welches sich aus einem Elektromagneten 1 und einem Ventilteil 2 zusammensetzt. Der Elektromagnet 1 und der Ventilteil 2 sind dabei unmittelbar aneinander angegliedert, wobei der Ventilteil 2 einen, dem Fachmann bekannten Aufbau aufweist, so dass im Folgenden nur noch auf den Aufbau des Elektromagneten 1 eingegangen werden soll.

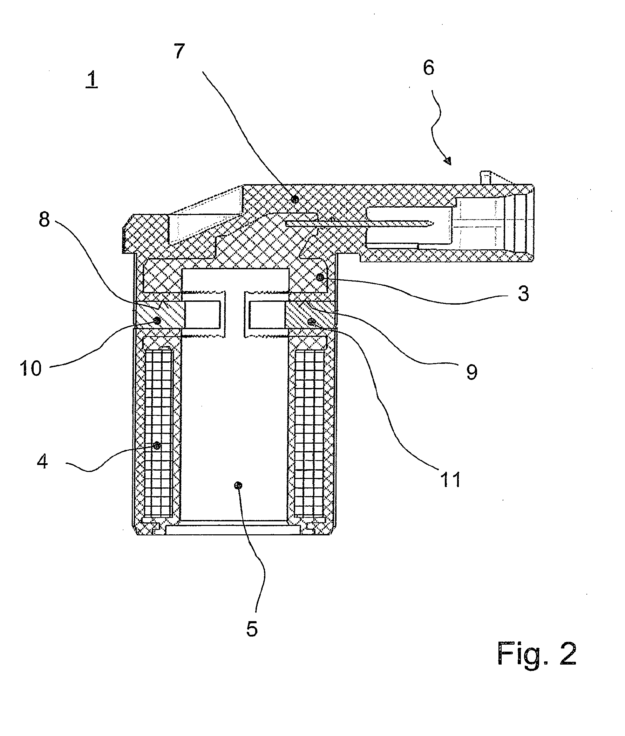

In Figur 2 ist ein Längsschnitt des Elektromagneten 1 dargestellt. Dieser verfügt über einen Spulenträger 3, welcher zum einen eine Spule 4 aufnimmt und zum anderen einen - aus Gründen der Übersichtlichkeit nicht dargestellten - Magnetanker in einem Innenraum 5 axial beweglich führt. Der Magnetanker, sowie die Führung dieses Magnetankers im Spulenträger 3 ist auf eine, dem Fachmann bekannte Art und Weise ausgebildet. Des Weiteren verfügt der Elektromagnet 1 über einen Anschlussabschnitt 6, an dem eine Stromversorgung angeschlossen werden kann, wobei der Strom dann über - ebenfalls nicht dargestellte - an- bzw. abwickelseitige Verbindungen zu der Spule 4 geführt wird. Um nun die Spule 4 insbesondere vor Feuchtigkeitseinflüssen aus der Umgebung zu schützen, ist der Spulenträger 3, sowie auch der Anschlussabschnitt 6 mit einer Umspritzung 7 versehen, die die Spule 4 vollständig umschließt. Diese Umspritzung 7 besteht hierbei aus Kunststoff.

In axialer Richtung benachbart zu der Spule 4 sind in dem Spulenträger 3 und auch in der Umspritzung 7 radial verlaufende Durchbrüche 8 und 9 vorgesehen, in die jeweils Einzelsegmente 10 und 11 eingeschoben sind.

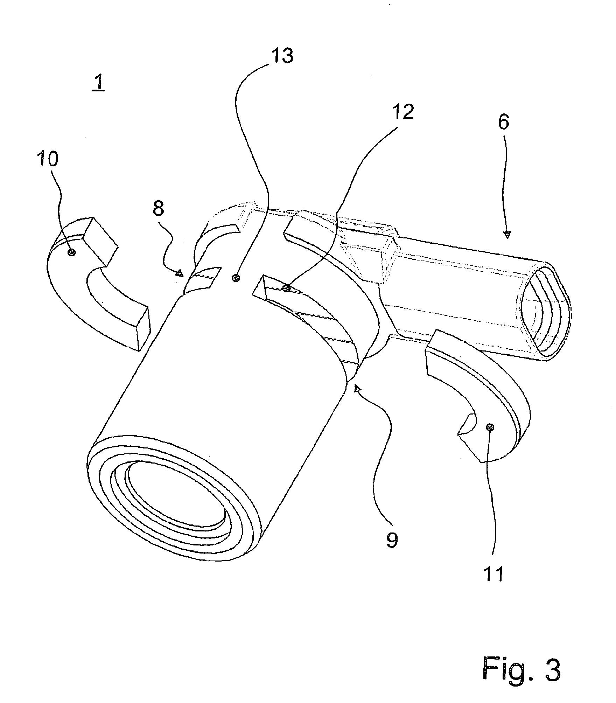

Wie insbesondere aus der perspektivischen Ansicht des Elektromagneten 1 in Figur 3 hervorgeht, sind diese Einzelsegmente 10 und 11 als Kreisringsegmente ausgebildet, die dem jeweiligen Durchbruch 8 bzw. 9 entsprechen. Im eingeschobenen Zustand füllen die Einzelsegmente 10 und 11 die Durchbrüche 8 und 9 vollständig aus und bilden bei einer Bestromung der Spule 4 den magnetisierten Endpol des Elektromagneten 1, über welchen das durch die Spule 4 erzeugte Magnetfeld in den Innenraum 5 des Spulenträgers 3 geleitet wird. Hierdurch wird auf eine, dem Fachmann bekannte Art und Weise eine translatorische Verschiebung des Magentankers im Innenraum 5 des Elektromagneten 1 hervorgerufen und darüber im zusammengebauten Zustand des elektromagnetischen Hydraulikventils auch eine entsprechende Verschiebung eines, im Ventilteil 2 geführten Steuerkolbens hervorgerufen, um einen Fluidfluss über den Ventilteil 2 zu regeln.

Schließlich ist in Figur 3 zu erkennen, dass die Durchbrüche 8 und 9 an axialen Begrenzungen jeweils über quer verlaufende Rippen 12 verfügen, die bei einem Einschieben des jeweiligen Einzelsegments 10 bzw. 11 zu einem Pressverband mit diesem führen und zudem toleranzbedingte Dimensionsschwankungen in dem jeweiligen Bereich ausgleichen. Zudem sind zwischen den Durchbrüchen 8 und 9 Axialstege 13 vorgesehen, über die die an- bzw. abwickelseitigen Verbindungen der Spule 4 mit dem Anschlussabschnitt 6 unterhalb der Umspritzung 7 geführt werden.

Mittels der erfindungsgemäßen Ausgestaltung kann somit ein elektromagnetisches Hydraulikventil mit einem kompakten Aufbau geschaffen werden, welches sich gleichzeitig durch einen niedrigen fertigungstechnischen Aufwand auszeichnet. Denn die Umspritzung 7 im Bereich des Spulenträgers 3 sowie des Anschlussabschnitts 6 kann bereits vorgesehen werden, bevor die, den Endpol ausbildenden Einzelsegmente 10 und 11 in die je zugehörigen Durchbrüche 8 bzw. 9 eingeschoben werden. Damit kann eine zuverlässige Abdichtung der Spule 4 im Bereich des Spulenträgers 3 ohne Verwendung zusätzlicher Dichtmittel sichergestellt werden. Des Weiteren führt die Anordnung der Einzelsegmente 10 und 11 zu keiner radialen Bauraumvergrößerung.

### Bezugszeichenliste

- 1: Elektromagnet
- 2: Ventilteil
- 3: Spulenträger
- 4: Spule
- 5: Innenraum
- 6: Anschlussabschnitt
- 7: Umspritzung
- 8: Durchbruch
- 9: Durchbruch
- 10: Einzelsegment
- 11: Einzelsegment
- 12: Rippen
- 13: Axialsteg

## Patentansprüche

1. Elektromagnetisches Hydraulikventil, umfassend einen Elektromagneten (1) mit einem Spulenträger (3), welcher mindestens eine Spule (4) in einer Umspritzung (7) vollständig umschlossen aufnimmt und zumindest einen Endpol trägt, **dadurch gekennzeichnet, dass** sich der Endpol aus Einzelsegmenten (10, 11) zusammensetzt, die in radial verlaufenden Durchbrüchen (8, 9) eingeschoben sind, welche im Spulenträger (3) und in der Umspritzung (7) und benachbart zu der mindestens einen Spule (4) ausgebildet sind.

2. Elektromagnetisches Hydraulikventil nach Anspruch 1, **dadurch gekennzeichnet, dass** die Einzelsegmente (10, 11) kreisringsegmentartige Konturen aufweisen, die jeweils einem Querschnitt des je zugehörigen Durchbruchs (8; 9) entsprechen.

3. Elektromagnetisches Hydraulikventil nach Anspruch 1 oder 2, **dadurch gekennzeichnet, dass** in Axialstegen (13) zwischen den Durchbrüchen (8, 9) je an- bzw. abwickelseitige Verbindungen der mindestens einen Spule (4) zu einem Anschlussabschnitt (6) verlaufen.

4. Elektromagnetisches Hydraulikventil nach einem der Ansprüche 1 bis 3, **dadurch gekennzeichnet, dass** die Durchbrüche (8, 9) an axialen Begrenzungen zumindest bereichsweise quer verlaufende Rippen (12) aufweisen.

5. Elektromagnetisches Hydraulikventil nach einem der vorhergehenden Ansprüche, **dadurch gekennzeichnet, dass** die Einzelsegmente (10, 11) als Stanzteile ausgebildet sind.

6. Elektromagnetisches Hydraulikventil nach einem der vorhergehenden Ansprüche, **dadurch gekennzeichnet, dass** die Umspritzung (7) aus Kunststoff besteht.

7. Vorrichtung zur Drehwinkelverstellung einer Nockenwelle gegenüber einer Kurbelwelle einer Brennkraftmaschine, umfassend ein elektromagnetisches Hydraulikventil nach einem der Ansprüche 1 bis 6.

## Claims

1. Electromagnetic hydraulic valve, comprising an electromagnet (1) having a coil carrier (3) which accommodates at least one coil (4) in a completely enclosed fashion in an injection-molded encapsulation (7) and has at least one end pole, **characterized in that** the end pole is composed of individual segments (10, 11) which are inserted into radially extending breakthroughs (8, 9) which are formed in the coil carrier (3) and in the injection-molded encapsulation (7), adjacent to the at least one coil (4).

2. Electromagnetic hydraulic valve according to Claim 1, **characterized in that** the individual segments (10, 11) have circular-ring-segment-like contours which each correspond to a cross section of the respectively associated breakthrough (8; 9).

3. Electromagnetic hydraulic valve according to Claim 1 or 2, **characterized in that** unwinding-side and winding-on-side connections of the at least one coil (4) respectively lead to a connection section (6) in axial webs (13) between the breakthroughs (8, 9).

4. Electromagnetic hydraulic valve according to one of Claims 1 to 3, **characterized in that** the breakthroughs (8, 9) have, at least in certain areas, transversely extending ribs (12) on axial boundaries.

5. Electromagnetic hydraulic valve according to one of the preceding claims, **characterized in that** the individual segments (10, 11) are embodied as punched parts.

6. Electromagnetic hydraulic valve according to one of the preceding claims, **characterized in that** the injection-molded encapsulation (7) is composed of plastic.

7. Device for adjusting the rotational angle of a camshaft with respect to a crankshaft of an internal combustion engine, comprising an electromagnetic hydraulic valve according to one of Claims 1 to 6.

## Revendications

1. Vanne hydraulique électromagnétique, comprenant un électroaimant (1) avec un porte-bobine (3), qui contient au moins une bobine (4) entièrement enveloppée dans un enrobage (7) et porte au moins un pôle terminal, **caractérisée en ce que** le pôle terminal se compose de segments individuels (10, 11), qui sont insérés dans des passages (8, 9) orientés radialement, lesquels sont formés dans le porte-bobine (3) et dans l'enrobage (7) et à proximité de ladite au moins une bobine (4).

2. Vanne hydraulique électromagnétique selon la revendication 1, **caractérisée en ce que** les segments individuels (10, 11) présentent des contours en forme de segments de cercle, qui correspondent respectivement à une section transversale du passage respectif correspondant (8; 9).

3. Vanne hydraulique électromagnétique selon la revendication 1 ou 2, **caractérisée en ce que** des raccordements respectifs de ladite au moins une bobine (4), du côté d'entrée et du côté de sortie de l'enroulement, s'étendent dans des nervures axiales (13) entre les passages (8, 9), jusqu'à une partie de raccordement (6).

4. Vanne hydraulique électromagnétique selon l'une quelconque des revendications 1 à 3, **caractérisée en ce que** les passages (8, 9) présentent sur des parois axiales au moins localement des nervures s'étendant transversalement (12).

5. Vanne hydraulique électromagnétique selon l'une quelconque des revendications précédentes, **caractérisée en ce que** les segments individuels (10, 11) sont des pièces estampées.

6. Vanne hydraulique électromagnétique selon l'une quelconque des revendications précédentes, **caractérisée en ce que** l'enrobage (7) se compose de matière plastique.

7. Dispositif pour le réglage de l'angle de rotation d'un arbre à cames par rapport à un vilebrequin d'un moteur à combustion interne, comprenant une vanne hydraulique électromagnétique selon l'une quelconque des revendications 1 à 6.
